# EUROPEAN PATENT APPLICATION

(11) **EP 4 545 757 A1**
(43) Date of publication of application: **30.04.2025**
(21) Application number: 24196223.2
(22) Date of filing: 23.08.2024
(51) Int. Cl.: F01D 25/04, F01D 5/26, F01D 9/06, F02C 7/22

(54) **DAMPED FLUID LINE FOR AIRCRAFT ENGINE**

(30) Priority: 24.10.2023 US 202318383362
(71) Applicant: RTX Corporation, Farmington, CT 06032 (US)
(72) Inventor: DAVIS-AMENDOLA, Kerry L., Wethersfield, 06109 (US); BOGUE, William, Hebron, 06248 (US); KOZAN, Stuart C., Bethany, 06524 (US); RAILTON, Ryan S., West Hartford, 06107 (US); GLASER, Seth M., Rocky Hill, 06067 (US); GRISHAM, Matthew T., Rocky Hill, 06067 (US); KRUMHOLZ, Michael A., West Hartford, 06119 (US); HOY, Eric H., East Hartford, 06118 (US); DUNN, Colby S., East Hartford, 06118 (US); ABEDON, Brian V., Silverthorne, 80498 (US); SABINO, Gianna, Fort Worth, 76126 (US); MORTILLARO, EmmaKate, Glastonbury, 06033 (US); HAQUE, Mir S., Lake Worth Beach, 33460 (US)
(74) Representative: Dehns

(57) **Abstract**

A method of operation is provided during which a fluid is directed through a fluid line (34) servicing a component (14) of an aircraft engine. Pressure wave oscillations travel through the fluid within the fluid line (34) at a frequency equal to or greater than one thousand five hundred hertz during the directing of the fluid. The pressure wave oscillations traveling through the fluid within the fluid line (34) are damped using an elastomeric foam sleeve (50A) in contact with the fluid line (34). The elastomeric foam sleeve (50A) extends longitudinally along and circumscribes the fluid line (34).

## Description

### BACKGROUND OF THE DISCLOSURE

### 1. Technical Field

This disclosure relates generally to an aircraft engine and, more particularly, to a fluid system for the aircraft engine.

### 2. Background Information

Various types of fluid systems are known for delivering and circulating fluids to and through various components of an aircraft engine. While these known fluid systems have various benefits, there is still room in the art for improvement.

### SUMMARY OF THE DISCLOSURE

According to an aspect of the present disclosure, a method of operation is provided during which a fluid is directed through a fluid line servicing a component of an aircraft engine. Pressure wave oscillations travel through the fluid within the fluid line at a frequency equal to or greater than one thousand hertz during the directing of the fluid. The pressure wave oscillations traveling through the fluid within the fluid line are damped using an elastomeric foam sleeve in contact with the fluid line. The elastomeric foam sleeve extends longitudinally along and circumscribes the fluid line.

According to another aspect of the present disclosure, another method of operation is provided during which a liquid fluid is directed through a flow regulator into a fluid line. The fluid line is included as part of a fluid system of a gas turbine engine. Flow of the liquid fluid is regulated through the flow regulator. The regulating of the flow of the liquid fluid through the flow regulator induces pressure wave oscillations in the liquid fluid within the fluid line. The pressure wave oscillations in the liquid fluid within the fluid line are damped using a line damper abutted radially against the fluid line. The line damper extends longitudinally along and circumscribes the fluid line. The line damper is configured from or otherwise includes an elastomeric foam.

According to still another aspect of the present disclosure, a system is provided for a gas turbine engine. This system includes a gas turbine engine component, a fluid system and an elastomeric foam sleeve. The fluid system is configured to deliver fluid to the gas turbine engine component. The fluid system includes an upstream flow regulator, a downstream flow regulator and a fluid line fluidly coupling the upstream flow regulator to the downstream flow regulator. The upstream flow regulator is configured to regulate flow of the fluid into the fluid line to the downstream flow regulator. The regulating of the flow of the fluid through the flow regulator induces pressure wave oscillations in the fluid within the fluid line at a frequency equal to or greater than one thousand hertz. The elastomeric foam sleeve is configured to damp the pressure wave oscillation in the fluid within the fluid line. The elastomeric foam sleeve contacts the fluid line. The elastomeric foam sleeve extends longitudinally along and circumscribes the fluid line.

The following optional features may be applied to any of the above aspects.

The fluid may be or otherwise include a liquid.

The pressure wave oscillations may have a frequency equal to or greater than one thousand hertz during the directing of the regulating of the flow of the liquid fluid. The liquid fluid may be directed through the fluid line at a pressure equal to or greater than one-thousand pounds per square inch.

The frequency may be equal to or greater than one thousand one hundred hertz (1100 Hz).

The frequency may be equal to or greater than one thousand five hundred hertz (1500 Hz).

The frequency may be equal to or greater than one thousand eight hundred hertz (1800 Hz).

The flow regulator may be configured as or otherwise include a solenoid valve. The fluid may be fuel.

The fluid may be directed through the fluid line at a pressure equal to or greater than one thousand pounds per square inch.

The fluid line may be fluidly coupled to and downstream of a flow regulator. The pressure wave oscillations may be generated by operation of the flow regulator.

The flow regulator may be configured as or otherwise include a solenoid valve.

The flow regulator may be a first flow regulator. The fluid line may be fluidly coupled to and upstream of a second flow regulator. The fluid line may extend longitudinally from a first coupling between the fluid line and the first flow regulator and a second coupling between the fluid line and the second flow regulator.

The elastomeric foam sleeve may have a longitudinal length. The elastomeric foam sleeve may contact the fluid line longitudinally along at least eighty-percent of the longitudinal length.

The elastomeric foam sleeve may have a longitudinal length. The elastomeric foam sleeve may contact the fluid line longitudinally along an entirety of the longitudinal length.

The elastomeric foam sleeve may contact the fluid line at least three hundred degrees circumferentially around the fluid line.

The elastomeric foam sleeve may contact the fluid line circumferentially around an entirety of the fluid line.

The elastomeric foam sleeve may have a full-hoop tubular body.

The elastomeric foam sleeve may extend circumferentially about the fluid line between a first circumferential side of the elastomeric foam sleeve and a second circumferential side of the elastomeric foam sleeve. The first circumferential side of the elastomeric foam sleeve may be circumferentially next to the second circumferential side of the elastomeric foam sleeve.

The first circumferential side of the elastomeric foam sleeve may be abutted circumferentially against the second circumferential side of the elastomeric foam sleeve.

The elastomeric foam sleeve may be configured from or otherwise include silicone rubber.

The fluid line may be mounted to a case of the aircraft engine by a mount. The elastomeric foam sleeve may be discrete from the mount.

The elastomeric foam sleeve may be spaced longitudinally from the mount along the fluid line by a gap.

The fluid may be fuel. The component may be configured as or otherwise include a fuel injector in the aircraft engine. The directing of the fluid may include directing the fluid through the fluid line to the fuel injector for injection into a combustion volume within the aircraft engine.

The aircraft engine may be configured as or otherwise include a gas turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of a system for an aircraft engine.
FIG. 2 is a partial schematic illustration of a fluid system for the engine system.
FIGS. 3A-C are cross-sectional illustrations of a fluid flow circuit with various line damper arrangements.
FIG. 4 is a partial side cutaway illustration of the fluid flow circuit with fastening devices mounting the line damper to a fluid line.

### DETAILED DESCRIPTION

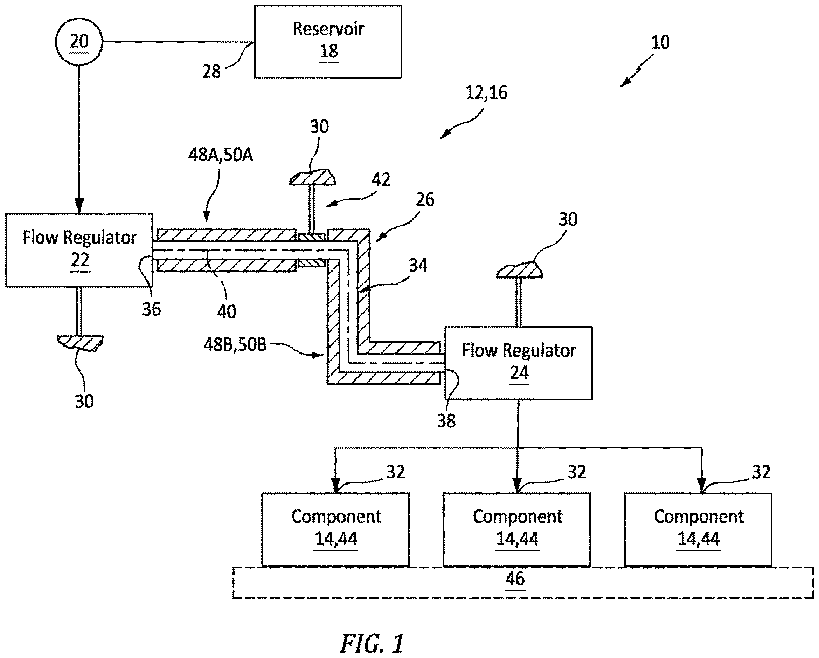

FIG. 1 is a partial schematic illustration of a system 10 for an engine of an aircraft. The aircraft may be an airplane, a rotorcraft (e.g., a helicopter), a drone (e.g., an unmanned aerial vehicle (UAV)) or any other manned or unmanned aerial vehicle or system. The aircraft engine may be a gas turbine engine, a rotary engine (e.g., a Wenkel engine), a reciprocating piston engine or any other type of internal combustion engine. The engine system 10 of FIG. 1 includes a fluid system 12 and one or more internal and/or peripheral components 14 of the aircraft engine.

The fluid system 12 is configured to service the one or more engine components 14. The fluid system 12 of FIG. 1, for example, is configured to deliver fluid to the engine components 14, where the fluid is used by the engine components 14 and/or subsequently distributed (e.g., sprayed, jetted or otherwise injected or directed) by the engine components 14 within the aircraft engine. For ease of description, the fluid system 12 may be described below as a fuel delivery system 16 for the aircraft engine and its engine components 14, and the fluid may be described below as fuel. The present disclosure, however, is not limited to such an exemplary fluid system application. The fluid system 12, for example, may alternatively deliver lubricant, coolant, hydraulic fluid and/or any other liquid fluid to the engine components 14 (e.g., at high pressure) to facilitate lubrication, cooling, actuation, etc. of the engine components 14.

The fluid system 12 of FIG. 1 includes a fluid reservoir 18, a fluid pump 20, an upstream fluid flow regulator 22, a downstream fluid flow regulator 24 and a fluid flow circuit 26. This fluid system 12, of course, may also include various other fluid system components, which are not shown in FIG. 1 for clarity of illustration. Examples of these other fluid system components include, but are not limited to, one or more filters, one or more sensors, one or more additional pumps, one or more additional flow regulators (e.g., valves or valve systems), one or more heat exchangers, and/or the like.

The fluid reservoir 18 is configured to store a quantity of the fluid before, during and/or after engine system operation. The fluid reservoir 18, for example, may be configured as or otherwise include a tank, a cylinder, a pressure vessel, a bladder or any other type of fluid storage container. The fluid reservoir 18 of FIG. 1 includes an outlet 28 from an internal cavity within the fluid reservoir 18 for storing the fluid.

Each of the fluid flow regulators 22, 24 is configured to regulate a flow of the fluid flowing through / across that respective fluid flow regulator 22, 24. Each of the fluid flow regulators 22, 24, for example, may be configured as a single valve, or include a system of multiple valves. The upstream fluid flow regulator 22, for example, may be configured as a throttle valve assembly with an internal solenoid valve. The downstream fluid flow regulator 24 may be configured as a fuel control with one or more internal control valves. The present disclosure, however, is not limited to such exemplary flow regulator configurations. Each flow regulator valve may be configured to fully open, fully close and/or move to one or more (e.g., predefined or infinitely adjustable) intermediate positions to regulate the flow of the fluid through the respective fluid flow regulator 22, 24. One or more of the fluid flow regulators 22 and/or 24 may each be (e.g., directly) mounted to a support structure 30 such as, but not limited to, an engine housing (e.g., a casing) for the aircraft engine.

The flow circuit 26 is configured to fluidly couple the fluid reservoir 18 to the one or more engine components 14. The flow circuit 26 of FIG. 1, for example, is arranged between and fluidly coupled to the reservoir outlet 28 and an inlet 32 into each engine component 14. This flow circuit 26 extends longitudinally from the reservoir outlet 28, sequentially through the fluid pump 20, the upstream fluid flow regulator 22, the downstream fluid flow regulator 24, to each component inlet 32.

The flow circuit 26 of FIG. 1 includes a fluid line 34; e.g., a fuel line. This fluid line 34 is a rigid tube (e.g., a metal conduit, metal pipe, etc.) which fluidly couples the upstream fluid flow regulator 22 to the downstream fluid flow regulator 24. A longitudinal upstream end 36 of the fluid line 34 of FIG. 1, for example, is (e.g., directly) fluidly coupled to an outlet from the upstream fluid flow regulator 22 by an upstream coupling; e.g., a threaded fluid fitting. A longitudinal downstream end 38 of the fluid line 34 of FIG. 1 is (e.g., directly) fluidly coupled to an inlet into the downstream fluid flow regulator 24 by a downstream coupling; e.g., a threaded fluid fitting. The fluid line 34 extends longitudinally along a centerline 40 from the line upstream end 36 to the line downstream end 38, defining a longitudinal length of the fluid line 34 along the centerline 40 between the line upstream end 36 and the line downstream end 38. The flow circuit 26 and its fluid line 34 may be mounted to the support structure 30 by a line mount 42. This line mount 42 may be (e.g., directly) mechanically fastened or otherwise connected to the support structure 30. The line mount 42 projects out from the support structure 30 to the fluid line 34. A longitudinal intermediate portion of the fluid line 34 may be clamped onto and/or otherwise connected to and is supported by the line mount 42. The connection between the line mount 42 and the fluid line 34 may be a rigid connection or a compliant connection (e.g., through a damping element).

The engine components 14 may be any components of the aircraft engine which utilize and/or transfer the fluid during aircraft engine operation. For example, where the fluid system 12 is configured as the fuel delivery system 16 and where the fluid is fuel, one or more or all of the engine components 14 may be configured as fuel injectors 44 within a combustor section or an auxiliary thrust section of the aircraft engine. Each of these fuel injectors 44 is configured to inject or otherwise deliver fuel into an internal volume 46 (e.g., a combustion chamber or another section of a core flowpath) within the aircraft engine for subsequent combustion. The present disclosure, however, is not limited to such exemplary arrangement. One or more of the engine components 14, for example, may alternatively be configured as a fuel actuated device. Moreover, as discussed above, the fluid may alternatively be lubricant, coolant, hydraulic fluid and/or any other liquid fluid. Here, the engine components 14 may be configured as fluid delivery devices (e.g., injectors), actuators (e.g., hydraulic pistons) and/or components of the aircraft engine which utilize lubrication (e.g., bearings, gears, etc.) and/or cooling (or heating). The present disclosure, however, is not limited to the foregoing exemplary engine components.

During operation of the engine system 10, the fluid pump 20 directs (e.g., pumps) a quantity of the fluid from the fluid reservoir 18 through the flow circuit 26 to the engine components 14. Along the flow circuit 26, a flow of the fluid is regulated by the fluid flow regulators 22 and 24 to increase the flow of the fluid to the engine components 14, to decrease the flow of the fluid to the engine components 14, to selectively divert the flow of the fluid to some or all of the engine components 14, etc.

During fluid flow regulation, the upstream fluid flow regulator 22 and its valve may oscillate (e.g., slightly open and close) to maintain the flow of the fluid at a predetermined (or requested) fluid flowrate and/or fluid pressure, or within a predetermined (or requested) fluid flowrate range and/or fluid pressure range. This oscillation may induce (e.g., high frequency) pressure wave oscillations in the fluid flowing downstream of the upstream fluid flow regulator 22 and, in particular, in the fluid flowing through the fluid line 34. Under certain conditions, a frequency of these pressure wave oscillations may be equal to or greater than one thousand five hundred hertz (1500 Hz). The frequency of the pressure wave oscillations, for example, may be between one thousand six hundred hertz (1600 Hz) and two thousand hertz (2000 Hz); e.g., equal to or about one thousand eight hundred hertz (1800 Hz). These pressure wave oscillations may locally increase a pressure of the fluid flowing within the fluid line 34. For example, where the fluid is directed into the fluid line 34 at a fluid pressure equal to or about one thousand one hundred pounds per square inch (1100 psi, about 7.6 MPa), the pressure wave oscillations may locally increase the fluid pressure to two thousand pounds per square inch (2000 psi, about 13.8 MPa), two thousand five hundred pounds per square inch (2500 psi, about 17.2 MPa), or even three thousand pounds per square inch (3000 psi, about 20.7 MPa). The fluid line 34 may thereby be subject to relatively high stress load cycling, which can significantly reduce a service life of the fluid line 34. The present disclosure, of course, is not limited to such exemplary fluid pressures nor frequencies of the pressure wave oscillations. The fluid, for example, may alternatively be directed into the fluid line 34 at a pressure between eight hundred pounds per square inch (800 psi, about 5.5 MPa) and one thousand pounds per square inch (1000 psi, about 6.9 MPa), or greater than thousand pounds per square inch (1000 psi, about 6.9 MPa). In another example, the frequency of these pressure wave oscillations may be less than one thousand five hundred hertz (1500 Hz) such as between one thousand hertz (1000 Hz) and one thousand five hundred hertz (1500 Hz); e.g., one thousand one hundred hertz (1100 Hz).

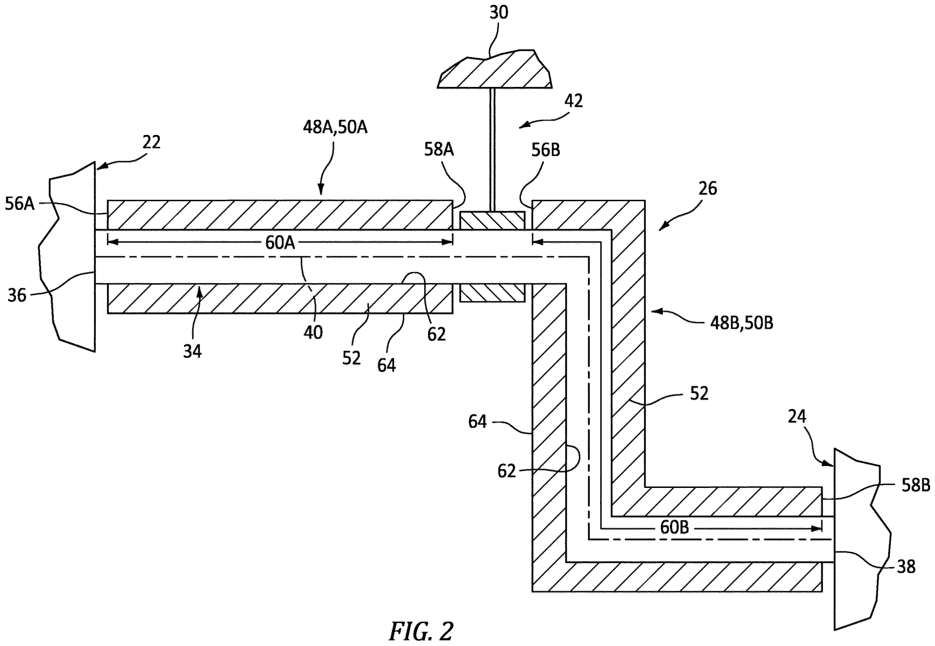

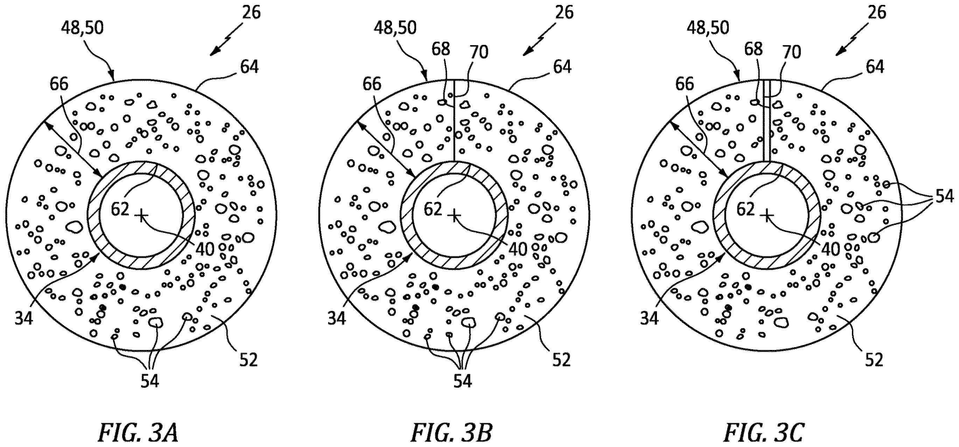

Referring to FIG. 2, to reduce the stress loading on the fluid line 34, the flow circuit 26 of FIG. 1 also includes one or more vibration dampers 48A and 48B (generally referred to as "48") for the fluid line 34. Each of these line dampers 48 is configured as or otherwise includes an elastomeric foam sleeve 50A, 50B (generally referred to as "50"). Referring to FIGS. 3A-C, each elastomeric foam sleeve 50 is configured as a tubular body formed by elastomeric foam 52 with multiple open-cell and/or closed cell pores 54. The elastomeric foam 52 is constructed from an elastomeric material such as, but not limited to, silicone rubber, fluorocarbon rubber (e.g., Viton^{™} material), or ethylene propylene diene monomer (EPDM) rubber. Alternatively, the elastomeric material may be nitrile butadiene rubber (NBR), neoprene rubber or chloroprene rubber where, for example, sulfur can be tolerated. The pores 54 within the elastomeric foam 52 are gas filled cavities, where the gas may be air or a pore forming gas used during manufacture of the elastomeric foam 52.

Referring to FIG. 2, each elastomeric foam sleeve 50A, 50B extends longitudinally along the centerline 40 from an upstream end 56A, 56B (generally referred to as "56") of that respective elastomeric foam sleeve 50 to a downstream end 58A, 58B (generally referred to as "58") of that respective elastomeric foam sleeve 50, defining a longitudinal length 60A, 60B (generally referred to as "60") of the respective elastomeric foam sleeve 50A, 50B along the centerline 40 between its sleeve upstream end 56A, 56B and its sleeve downstream end 58A, 58B. Referring to FIGS. 3A-C, each elastomeric foam sleeve 50 extends radially (relative to the centerline 40) from a radial inner side 62 of the respective elastomeric foam sleeve 50 to a radial outer side 64 of the respective elastomeric foam sleeve 50, defining a radial thickness 66 of the respective elastomeric foam sleeve 50 between its sleeve inner side 62 and its sleeve outer side 64. This sleeve thickness 66 may be uniform (the same) circumferentially about the centerline 40 and/or longitudinally along the centerline 40; see also FIG. 2. Each elastomeric foam sleeve 50 extends circumferentially about (e.g., partially or completely around) the centerline 40. The elastomeric foam sleeve 50 of FIG. 3A, for example, extends completely circumferentially around the centerline 40 providing that elastomeric foam sleeve 50 with a full-hoop body; e.g., a circumferentially uninterrupted body. The elastomeric foam sleeve 50 of FIGS. 3B and 3C, by contrast, extends partially (e.g., at least 300°, 320° or 340°) circumferentially about the centerline 40 between opposing circumferential sides 68 and 70 of the elastomeric foam sleeve 50. The sleeve first side 68 of FIGS. 3B and 3C is disposed circumferentially next to (e.g., adjacent) the sleeve second side 70. In some embodiments, referring to FIG. 3B, the sleeve first side 68 may circumferentially engage (e.g., abut against, contact, etc.) the sleeve second side 70. In other embodiments, referring to FIG. 3C, the sleeve first side 68 may be (e.g., slightly) circumferentially spaced from the sleeve second side 70. A small gap, for example, may be formed by and extend circumferentially between the sleeve first side 68 and the sleeve second side 70.

Referring to FIG. 2, each line damper 48 and its elastomeric foam sleeve 50 is mounted to the fluid line 34. The fluid line 34 of FIG. 2, for example, projects longitudinally through an inner bore of each elastomeric foam sleeve 50. Each elastomeric foam sleeve 50 extends longitudinally along the fluid line 34 between its respective line ends 56 and 58. Here, each elastomeric foam sleeve 50 is disposed radially next to and contacts (e.g., is abutted against, is pressed against, etc.) the fluid line 34 longitudinally along at least eighty percent (80%), ninety percent (90%) or a longitudinal entirety of its sleeve length 60. Referring to FIGS. 3A-C, each elastomeric foam sleeve 50 extends circumferentially about (e.g., partially or completely around) the fluid line 34. Here, each elastomeric foam sleeve 50 is disposed radially next to and contacts (e.g., is abutted against, is pressed against, etc.) the fluid line 34 at least three hundred degrees (300°), three hundred and twenty degrees (320°), or three hundred and forty degrees (340°) circumferentially around a circumference of the fluid line 34. The elastomeric foam sleeve 50 of FIGS. 3A and 3B, in particular, is disposed radially next to and contacts the fluid line 34 along an entire circumference of the fluid line 34. In general, the radial contact between the elastomeric foam sleeve 50 and the fluid line 34 is longitudinally and/or circumferentially uninterrupted. However, it is contemplated one or more slight longitudinally and/or circumferentially interruptions may occur in the radial contact between the elastomeric foam sleeve 50 and the fluid line 34 where, for example, the elastomeric foam sleeve 50 follows a tight bend in the fluid line 34, etc.

Referring to FIG. 2, the upstream elastomeric foam sleeve 50A is disposed longitudinally along the fluid line 34 and the centerline 40 between the upstream fluid flow regulator 22 and the line mount 42. The upstream elastomeric foam sleeve 50A is thereby mounted to and covers an upstream portion of the fluid line 34. In particular, the sleeve upstream end 56A of the upstream elastomeric foam sleeve 50A of FIG. 2 is longitudinally next to, but (e.g., slightly) spaced from the upstream fluid flow regulator 22. However, the sleeve upstream end 56A of the upstream elastomeric foam sleeve 50A may alternatively longitudinally engage the upstream fluid flow regulator 22. The sleeve downstream end 58A of the upstream elastomeric foam sleeve 50A of FIG. 2 is longitudinally next to, but (e.g., slightly) spaced from the line mount 42. However, the sleeve downstream end 58A of the upstream elastomeric foam sleeve 50A may alternatively longitudinally engage the line mount 42. The upstream elastomeric foam sleeve 50A, however, may still be discrete from (e.g., not a part of) the line mount 42.

The downstream elastomeric foam sleeve 50B is disposed longitudinally along the fluid line 34 and the centerline 40 between the line mount 42 and the downstream fluid flow regulator 24. The downstream elastomeric foam sleeve 50B is thereby mounted to and covers a downstream portion of the fluid line 34. In particular, the sleeve upstream end 56B of the downstream elastomeric foam sleeve 50B of FIG. 2 is longitudinally next to, but (e.g., slightly) spaced from the line mount 42. However, the sleeve upstream end 56B of the downstream elastomeric foam sleeve 50B may alternatively longitudinally engage the line mount 42. The downstream elastomeric foam sleeve 50B, however, may still be discrete from (e.g., not a part of) the line mount 42. The sleeve downstream end 58B of the downstream elastomeric foam sleeve 50B of FIG. 2 is longitudinally next to, but (e.g., slightly) spaced from the downstream fluid flow regulator 24. However, the sleeve downstream end 58B of the downstream elastomeric foam sleeve 50B may alternatively longitudinally engage the downstream fluid flow regulator 24.

With the foregoing arrangement, the line dampers 48 and their elastomeric foam sleeves 50 are configured to damp the pressure wave oscillations travelling through the fluid in the fluid line 34. The elastomeric foam sleeves 50, for example, may absorb vibrations and dissipate those vibrations through deformation (e.g., slight compression, expansions, bending, etc.) of the elastomeric foam 52 forming each respective elastomeric foam sleeve 50. The line dampers 48 and their elastomeric foam sleeves 50 may thereby reduce the stress loading on the fluid line 34 and increase the service life of the fluid line 34.

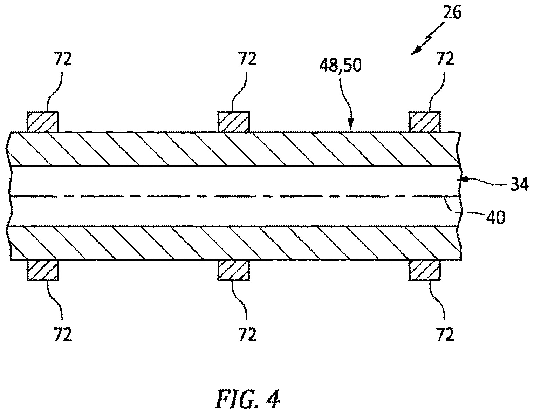

In some embodiments, each elastomeric foam sleeve 50 may be pressed radially against the fluid line 34. For example, there may be a tight fit between each elastomeric foam sleeve 50 and the fluid line 34 where an outer radius of the fluid line 34 is greater than an inner radius of each elastomeric foam sleeve 50 prior to mounting onto the fluid line 34. In addition or alternatively, referring to FIG. 4, one or more fastening devices 72 (schematically shown) may be used to press (e.g., squeeze, compress, etc.) each elastomeric foam sleeve 50 against the fluid line 34. Examples of the fastening devices 72 include, but are not limited to, clamps, zip ties, cords, tape, and the like.

While the elastomeric foam sleeves 50 may be generally described above with reference to a relatively high frequency system and/or a relatively high pressure system, the present disclosure is not limited thereto. It is contemplated, for example, the elastomeric foam sleeve(s) 50 may also provide a damping benefit for a relatively low frequency system and/or a relatively low pressure systems as well.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of operation, comprising:
directing a fluid through a fluid line (34) servicing a component (14) of an aircraft engine, wherein pressure wave oscillations travel through the fluid within the fluid line (34) at a frequency equal to or greater than one thousand hertz during the directing of the fluid; and
damping the pressure wave oscillations traveling through the fluid within the fluid line (34) using an elastomeric foam sleeve (50A) in contact with the fluid line (34), the elastomeric foam sleeve (50A) extending longitudinally along and circumscribing the fluid line (34).

2. The method of claim 1, wherein the fluid comprises a liquid.

3. The method of claim 1 or 2, wherein the frequency is equal to or greater than one thousand eight hundred hertz.

4. The method of claim 1, 2 or 3, wherein the fluid is directed through the fluid line (34) at a pressure equal to or greater than one thousand pounds per square inch (about 6.9 MPa).

5. The method of any preceding claim, wherein the fluid line (34) is fluidly coupled to and downstream of a flow regulator (22), and the pressure wave oscillations are generated by operation of the flow regulator (22),
wherein, optionally, the flow regulator (22) comprises a solenoid valve.

6. The method of claim 5, wherein:
the flow regulator is a first flow regulator (22), and the fluid line (34) is fluidly coupled to and upstream of a second flow regulator (24); and
the fluid line (34) extends longitudinally from a first coupling between the fluid line (34) and the first flow regulator (22) and a second coupling between the fluid line (34) and the second flow regulator (24).

7. The method of any preceding claim, wherein:
the elastomeric foam sleeve (50A) has a longitudinal length (60A); and
the elastomeric foam sleeve (50A) contacts the fluid line (34) longitudinally along at least eighty-percent of the longitudinal length (60A).

8. The method of any preceding claim, wherein the elastomeric foam sleeve (50A) contacts the fluid line (34) at least three hundred degrees circumferentially around the fluid line (34).

9. The method of any preceding claim, wherein the elastomeric foam sleeve (50A) has a full-hoop tubular body.

10. The method of any preceding claim, wherein:
the elastomeric foam sleeve (50A) extends circumferentially about the fluid line (34) between a first circumferential side (68) of the elastomeric foam sleeve (50A) and a second circumferential side (70) of the elastomeric foam sleeve (50A); and
the first circumferential side (68) of the elastomeric foam sleeve (50A) is circumferentially next to the second circumferential side (70) of the elastomeric foam sleeve (50A),
wherein, optionally, the first circumferential side (68) of the elastomeric foam sleeve (50A) is abutted circumferentially against the second circumferential side (70) of the elastomeric foam sleeve (50A).

11. The method of any preceding claim, wherein:
the elastomeric foam sleeve (50A) comprises silicone rubber; and/or
the aircraft engine comprises a gas turbine engine.

12. The method of any preceding claim, wherein:
the fluid line (34) is mounted to a case of the aircraft engine by a mount (42); and
the elastomeric foam sleeve (50A) is discrete from the mount (42), wherein, optionally, the elastomeric foam sleeve (50A) is spaced longitudinally from the mount (42) along the fluid line (34) by a gap.

13. The method of any preceding claim, wherein:
the fluid comprises fuel;
the component (14) comprises a fuel injector in the aircraft engine; and
the directing of the fluid comprises directing the fluid through the fluid line (34) to the fuel injector for injection into a combustion volume within the aircraft engine.

14. A method of operation, comprising:
directing a liquid fluid through a flow regulator (22) into a fluid line (34), the fluid line (34) included as part of a fluid system (12) of a gas turbine engine;
regulating flow of the liquid fluid through the flow regulator (22), the regulating of the flow of the liquid fluid through the flow regulator (22) inducing pressure wave oscillations in the liquid fluid within the fluid line (34); and
damping the pressure wave oscillations in the liquid fluid within the fluid line (34) using a line damper (48A) abutted radially against the fluid line (34), the line damper (48A) extending longitudinally along and circumscribing the fluid line (34), and the line damper (48A) comprising an elastomeric foam (52),
wherein, optionally:
the pressure wave oscillations have a frequency equal to or greater than one thousand hertz during the directing of the regulating of the flow of the liquid fluid; and
the liquid fluid is directed through the fluid line (34) at a pressure equal to or greater than one-thousand pounds per square inch (about 6.9 MPa).

15. A system (10) for a gas turbine engine, comprising:
a gas turbine engine component (14);
a fluid system (12) configured to deliver fluid to the gas turbine engine component (14), the fluid system (12) including an upstream flow regulator (22), a downstream flow regulator (24) and a fluid line (34) fluidly coupling the upstream flow regulator (22) to the downstream flow regulator (24), the upstream flow regulator (22) configured to regulate flow of the fluid into the fluid line (34) to the downstream flow regulator (24), wherein the regulating of the flow of the fluid through the flow regulator (22) induces pressure wave oscillations in the fluid within the fluid line (34) at a frequency equal to or greater than one thousand hertz; and
an elastomeric foam sleeve (50A) configured to damp the pressure wave oscillation in the fluid within the fluid line (34), the elastomeric foam sleeve (50A) contacting the fluid line (34), and the elastomeric foam sleeve (50A) extending longitudinally along and circumscribing the fluid line (34).
